# NEUE EUROPÄISCHE PATENTSCHRIFT

(11) **EP 0 670 504 B2**
(45) Veröffentlichungstag und Bekanntmachung des Hinweises auf die Entscheidung über den Einspruch: **02.01.2002**
(45) Hinweis auf die Patenterteilung: 07.01.1998
(21) Anmeldenummer: 95810104.0
(22) Anmeldetag: 17.02.1995
(51) Int. Cl.: G01S 17/02

(54) **Steuereinrichtung und Verfahren zur berührungslosen Steuerung einer sanitären Anlage**
Control device and procedure for touch-free control of sanitation equipment
Dispositif de commande et procédé pour la commande sans contact d'une installation sanitaire

(30) Priorität: 03.03.1994 CH 63094
(43) Veröffentlichungstag der Anmeldung: 06.09.1995
(73) Patentinhaber: GEBERIT TECHNIK AG, 8645 Jona (CH)
(72) Erfinder: Mauerhofer, Alex, CH-7324 Vilters (CH)
(74) Vertreter: Groner, Manfred

(56) Entgegenhaltungen:
- EP-A- 0 525 822
- EP-A1- 0 547 415
- WO-A-88/05900
- DE-T2- 3 787 650
- GB-A- 2 195 763
- US-A- 5 001 508
- " Grundlagen der Opto-Elektronik" Prospekt der Firma Erwin Sick GmbH,Pf 310, D-7808 Waldkirch

## Beschreibung

Die Erfindung betrifft eine elektronische Steuereinrichtung zur berührungslosen Steuerung einer sanitären Anlage nach dem Oberbegriff des Anspruchs 1.

Elektronische Steuereinrichtungen dieser Art sind insbesondere bei sanitären Anlagen bekannt. Sie kommen auf diesem Gebiet zusehens mehr zur Anwendung, einerseits im öffentlichen Bereich aus hygienischen Gründen, andererseits generell zur Reduktion des Wasserverbrauchs.

Der Prospekt der Firma Erwin Sick GmbH, Pf. 310, D-7808 Waldkirch "Grundlagen der Opto-Elektronik" befasst sich mit den Grundlagen der Opto-Elektronik und beschreibt auf Seite 7 einen Lichtstrahl mit Hintergrundausblendung. Eine Anwendung solcher Tasten bei sanitären Anlagen kann dieser Schrift nicht entnommen werden.

Die EP-A-0 547 415 betrifft eine Einrichtung zur berührungslosen Steuerung einer Sanitärarmatur. Bei dieser geht es insbesondere darum, eine aufgrund von inneren Alterungsvorgängen abnehmende Empfindlichkeit in bestimmten Abständen wieder herzustellen. Hierbei wird mittels eines Mikroprozessors in ähnlicher Weise wie bei einem Initialisierungsmodus die Ausgangsspannung einer Treiberschaltung ausgehend von einem niedrigen Wert kontinuierlich erhöht. Tastobjekte mit unterschiedlichen Reflexionseigenschaften werden mit der genau gleiche Sendeleistung ertastet. Die Leistung muss hier somit so eingestellt sein, dass auch Benutzer in schwarzer Kleidung ertastet werden können. Bei einem Benutzer in heller und somit gut reflektierender Kleidung wird mit einer unnötig hohen Leistung gesendet.

Bekannt sind auch solche Steuereinrichtungen zur berührungslosen Betätigung von Waschanlagen. Diese basieren auf einer InfrarotSensorik. Diese weisen einen mit konstanter, impulsförmiger Strahlungsleistung arbeitenden Infrarotsender auf, der so eingestellt wird, dass das Waschbecken von einem mit einstellbarer Empfindlichkeit arbeitenden Infrarotempfänger nicht erfasst wird, wohl aber ein im Zwischenbereich befindlicher Gegenstand, z.B. eine Hand. So ist beispielsweise durch die CH-A-646 766 eine berührungslose Steuereinrichtung bekannt geworden, die einen Infrarot-Lichttaster aufweist, der in einem Wasserauslauf eingebaut ist. Bei der Einführung einer Hand in die Erfassungszone des Lichttasters spricht dieser an. Die Erfassungszone ist der Überschneidungsbereich zwischen einer Sende- und einer Empfangskeule. Die Sendeleistung des Infrarotstrahlers ist dabei konstant. Zur Ausblendung eines vorhandenen Hintergrundes wird die Reichweite des Systems entsprechend begrenzt.

Weiter ist durch die CH-A-651 143 eine berührungslose elektrische Steuereinrichtung bekannt geworden, bei der zwei im Abstand zueinander angeordnete Signalgeber vorgesehen sind, die abwechselnd aktiviert werden. In der Umgebung der Signalgeber sind zudem zwei Empfänger angeordnet, die so geschaltet sind, daß nur dann ein in der Wasserführung angeordnetes Ventil geöffnet wird, wenn Reflexionen der Signale beider Signalgeber empfangen werden. Da sowohl zwei Sender als auch zwei Empfänger notwendig sind, ist diese Steuereinrichtung vergleichsweise aufwendig und der Energieverbrauch vergleichsweise hoch.

Schliesslich ist zur Steuerung der Spülung eines Urinals eine Steuereinrichtung bekannt, die eine Radarsonde aufweist. Diese Sonde ist richtungserkennend und spricht auf eine Hinbewegung als auch auf eine nachfolgende Wegbewegung an. Auch diese Einrichtung ist vergleichsweise aufwendig.

Der Erfindung liegt die Aufgabe zugrunde, eine Steuereinrichtung der genannten Art zu schaffen, die einen einfacheren elektrischen und mechanischen Aufbau aufweist und die dennoch funktionssicher und zudem kostengünstiger herstellbar ist. Die Steuereinrichtung soll sich besonders zur Steuerung von Sanitäranlagen und insbesondere eines Urinals eignen, und störungen durch Reflexionen an einem spiegel sollen wirksam vermieden werden.

Die Aufgabe ist bei einer gattungsgemässen Steuereinrichtung gemäss Anspruch 1 gelöst. Bei der erfindungsgemässen Steuereinrichtung werden somit auch Reflexionen berücksichtigt, die ausserhalb des vorbestimmten Erfassungsbereichs ihren Ursprung haben. Dadurch ist es möglich, den Erfassungsbereich exakt zu definieren. Der elektrische und mechanische Aufbau der erfindungsgemässen Steuereinrichtung ist sehr einfach, da lediglich ein Sender und ein Empfänger erforderlich ist. Die Steuereinrichtung kann beispielsweise hinter einer Abdeckplatte in einer Wandnische untergebracht werden. sonders kostengünstige und einfache Realisierung der erfindungsgemässen Steuereinrichtung ergibt sich dann, wenn die Empfangsvorrichtung eine Differentialdiode aufweist und ein diffus reflektierter Anteil eines Lichtflecks auf dem Tastobjekt mittels einer Linse auf diese Differentialdiode abgebildet wird.

Störungen durch Reflexionen an einem Spiegel sind dadurch wirksam vermieden, indem im Abstand zur Empfangsvorrichtung ein Referenzempfänger angeordnet ist, und zur Verhinderung einer Schaltung aufgrund einer Spiegelung nur dann geschaltet wird, wenn der Empfänger und die Referenzempfänger jeweils ein Signal empfangen. Bei einer zu erfassenden diffusen Reflexion empfangen immer der Empfänger und der Referenzempfänger ein Signal, bei einer auszuschliessenden spiegelnden Reflexion jedoch nur der Empfänger oder der Referenzempfänger.

Nach einer vorteilhaften Weiterbildung der Erfindung ist zur Vordergrundausblendung eine Diode vorgesehen, die Reflexionen im Nahbereich des Senders empfängt.

Die erfindungsgemässe Steuereinrichtung eignet sich insbesondere zur Steuerung eines Urinals. Denkbar sind jedoch auch Anwendungen auf anderen Gebieten von sanitären Anlagen.

Ausführungsbeispiele der Erfindung werden nachfolgend anhand der Zeichnungen näher erläutert. Es zeigen:
- Fig. 1: schematisch eine erfindungsgemässe Steuereinrichtung an einem Urinal,
- Fig. 2: eine Darstellung der Intensität der Signale an einem ersten Empfänger und der Signale an einem zweiten Empfänger in Abhängigkeit des Abstandes der Reflexion vom Sender,
- Fig. 3: schematisch eine Variante der erfindungsgemässen Steuereinrichtung,
- Fig. 4: eine Darstellung gemäss Fig. 2, jedoch angepasst an die Ausführung gemäss Fig. 3,
- Fig. 5: schematisch eine weitere Variante der erfindungsgemässen Steuereinrichtung, und
- Fig. 6: eine schematische Darstellung der Hintergrundausblendung sowie der Vordergrundausblendung bei einer erfindungsgemässen Steuereinrichtung.

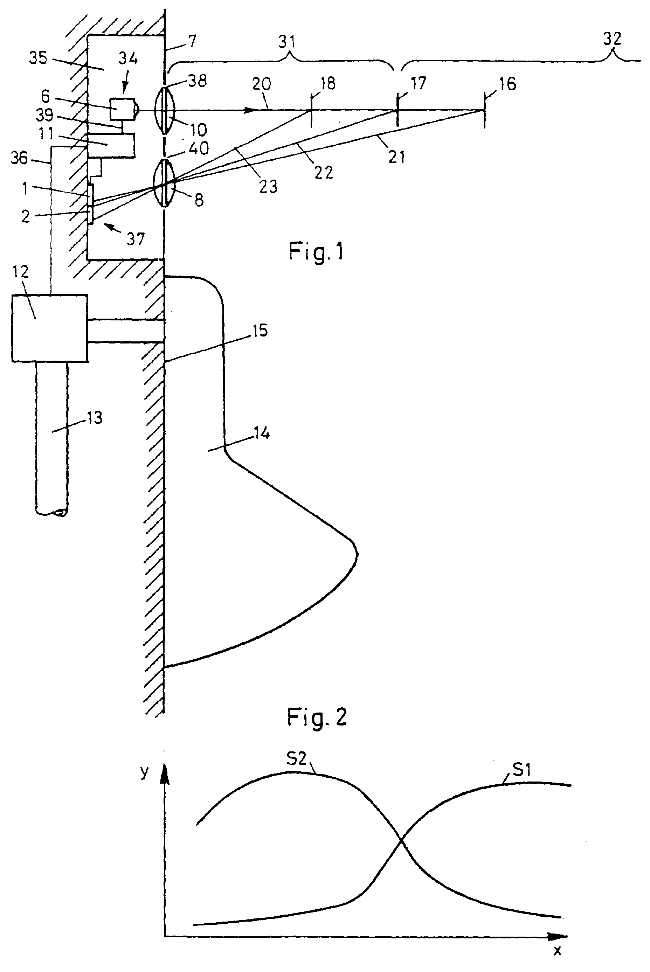

Die Fig. 1 zeigt ein Urinal 14, das an einer Gebäudewand 15 befestigt ist. Zur Spülung des Urinals 14 ist dieses an einer Wasserleitung 13 angeschlossen. Mit einem in der Leitung 13 eingebauten Spülventil 12 wird die Spülung aufgrund eines Steuersignals einer Steuereinrichtung 34 geöffnet bzw. geschlossen. Die Steuereinrichtung 34 ist beispielsweise hinter einer Abdekkung 7 in einer Nische 35 der Gebäudewand 15 untergebracht. Eine elektrische Leitung 36 verbindet eine Steuereinheit 11 der Steuereinrichtung 34 mit dem Spülventil 12.

Die Steuereinrichtung 34 weist eine Sendelinse 10 auf, die in einer Oeffnung 38 der Abdeckung 7 befestigt ist. Hinter dieser Sendelinse 10 ist ein Sender 6 angeordnet, der über eine Leitung 39 mit der Steuereinheit 11 verbunden ist. Der Sender 6 ist vorzugsweise eine Lichtdiode, die Infrarot-Lichtimpulse erzeugt. Vorzugsweise wird die minimale Erfassungsleistung des Senders 6 gemessen und den Relexionseigenschaften des Hintergrundes nachgeführt, wie dies in der schweizerischen Patentanmeldung Nr. 01955/93-6 näher erläutert ist. Der Energieverbrauch ist hierbei sehr klein, so dass mittels einer hier nicht gezeigten Batterie die Einrichtung etwa zwei Jahre betrieben werden kann. Die Steuereinrichtung weist zudem eine Empfangslinse 8 auf, die im Abstand zur Sendelinse 10 in einer Oeffnung 40 der Abdekkung 7 befestigt ist. Hinter der Linse 8 ist, etwas nach unten versetzt, eine Empfangsvorrichtung 37 mit einem ersten Empfänger 1 und einem zweiten Empfänger 2 angeordnet. Die Empfänger 1 und 2 sind vorzugsweise übliche Empfangsdioden, die wie in Fig. 1 gezeigt in einer zur Abdeckung 7 parallelen Ebene nebeneinander in unterschiedlichen Abständen zum Sender 6 angeordnet sind.

Der Sender 6 sendet gerichtete, von der Wandung 15 weggehende Signale 20 aus. Befindet sich nun ein Benutzer in einem Erfassungsbereich 31, so erzeugen die Signale 20 auf diesem einen hier nicht näher dargestellten Lichtfleck, der diffus reflektiert wird. Die Empfangslinse 8 empfängt einen Anteil 23 dieser diffus reflektierten Strahlung und bildet diese auf den zweiten Empfänger 2 ab.

Befindet sich der Benutzer oder ein sonstiges Tastobjekt an einem vom Sender 6 weiter entfernten Schaltpunkt 17, so wird ein Lichtfleck am Benutzer ebenfalls diffus reflektiert. Der von der Empfangslinse 8 empfangene reflektierte Strahlungsanteil wird hier jedoch im wesentlichen zu gleichen Teilen dem ersten Empfänger 1 und dem zweiten Empfänger 2 zugeführt.

Befindet sich nun die Bedienungsperson an einem im Hintergrund 16 und somit noch weiter vom Sender 6 entfernten Punkt, so wird die von der Empfangslinse 8 abgebildete Strahlung hauptsächlich dem ersten Empfänger 1 zugeführt.

Die Fig. 2 zeigt bei der Anordnung gemäss Fig. 1 mit einer Kurve S1 die Intensität y der Signale am Empfänger 1 in Abhängigkeit vom Abstand x eines Tastobjektes vom Sender 6 und mit der Kurve S2 entsprechend die Intensität der Signale am Empfänger 2. Wie ersichtlich, sind die Signale am Empfänger 1 in einem Abstand, der grösser ist als der Abstand des Schaltpunktes 17 zum Sender 6, höher als die Intensität der Signale am Empfänger 2. Ist der Abstand des Tastobjektes zum Sender 6 kürzer als der Abstand des Schaltpunktes 17, so sind umgekehrt die Signale am Empfänger 2 grösser als am Empfänger 1. Durch ein Vergleich der Intensitäten der beiden Empfänger 1 und 2 kann somit ein Tastobjekt, das sich zwischen dem Schaltpunkt 17 und der Sendelinse 10 befindet von einem Tastobjekt im Hintergrund unterschieden werden. In der Fig. 1 sind diese beiden Bereiche mit den Bezugszeichen 31 und 32 angegeben. Der Schaltpunkt 17 ist dann auch bei relativ dunklen Tastobjekten gut erkennbar, wenn die Signale der Empfänger 1 und 2 subtrahiert werden. Die Empfangsvorrichtung 37 kann auch mehr als zwei Empfänger bzw. Dioden aufweisen, wenn eine Unterteilung in weitere Bereiche gewünscht ist.

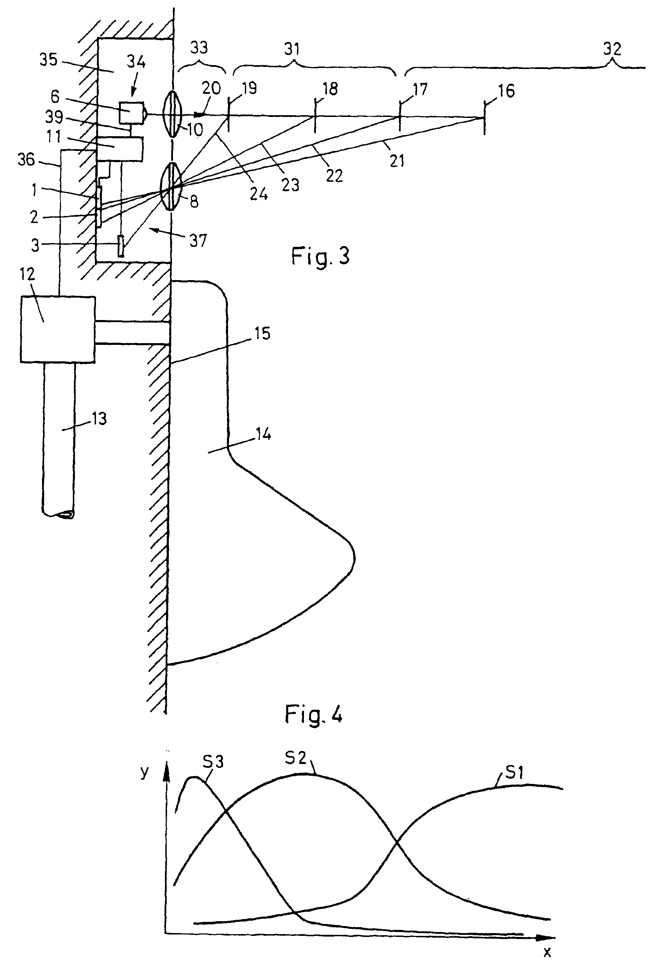

Bei der Ausführung gemäss den Figuren 3 und 4 ist ein dritter Empfänger 3 vorgesehen, der ebenfalls hinter der Abdekkung 7 im Abstand zur Empfangsvorrichtung angeordnet ist. Dieser Empfänger 3, der ebenfalls eine Diode sein kann, empfängt hauptsächlich Signale, die sich in einem Vordergrund 19 befinden. Mittels dieses dritten Empfängers 3 ist es möglich, Tastobjekte im Blindbereich zu erkennen. Um bei sehr hellen Objekten einen definierten Blindbereich zu erhalten, werden die Signale der Empfänger 1 und 3 addiert.

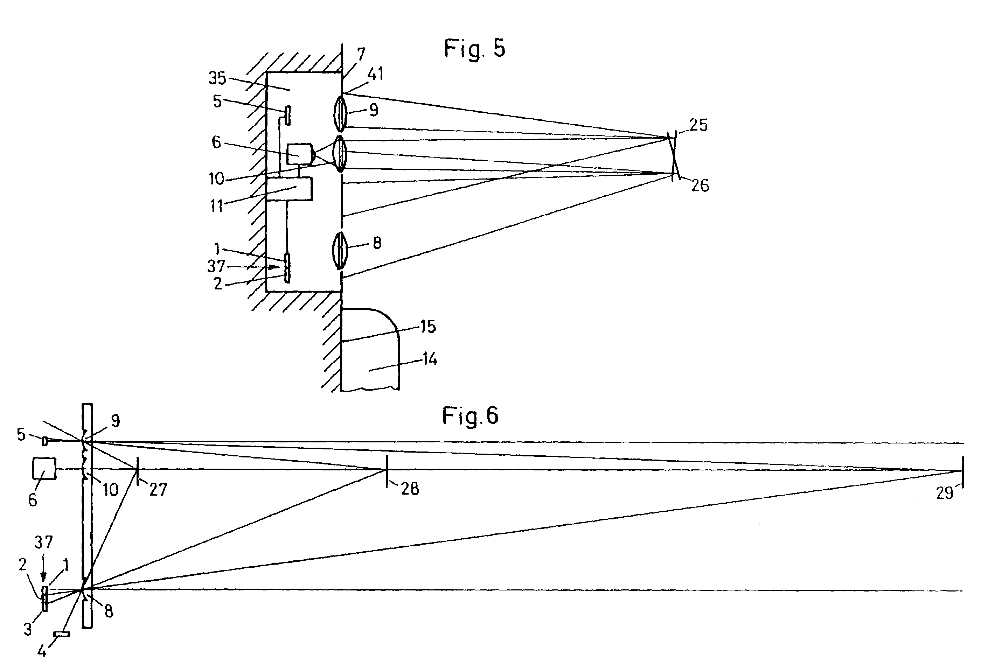

Die Weiterbildung gemäss Fig. 5 weist eine weitere Empfangslinse 9 auf, die im Abstand zur Sendelinse 10 in einer Oeffnung 41 der Abdeckung 7 befestigt ist. Hinter dieser weiteren Empfangslinse 9 ist ein Referenzempfänger 5 angeordnet. Befindet sich nun im Hintergrund ein Spiegel 25, der im wesentlichen rechtwinklig zur optischen Achse des Senders 6 ausgerichtet ist, so werden Signale des Senders 6 durch den Spiegel 25 zur Empfangslinse 9 reflektiert. Diese reflektierten Signale werden durch die Linse 9 am Referenzempfänger 5 abgebildet, der entsprechende Signale der Steuereinheit 11 zuführt. Da nun die Reflexionen des Spiegels 25 nicht diffus sind, empfängt die Empfangsvorrichtung 37 durch die Reflexionen des Spiegels 25 keine Signale. Ist nun ein Spiegel 26 zur Empfangsvorrichtung 37 hin geneigt, so empfängt ausschliesslich die Empfangsvorrichtung 37 Signale, jedoch nicht der Referenzempfänger 5. Befindet sich anstelle der Spiegel 25 und 26 ein diffus reflektierendes Tastobjekt, wie beispielsweise eine Person, so empfangen die Empfangsvorrichtung 37 als auch der Referenzempfänger 5 gleichzeitig Signale. Die gleichzeitige Detektierung vom reflektierten Licht in beiden Empfängern 37 und 5 kann bei dieser Ausführung somit als Bedingung für die Erkennung eines gültigen Tastobjektes verwendet werden.

Die Fig. 6 zeigt eine Ausführung, bei der die Empfangsvorrichtung 37 nebeneinander einen ersten Empfänger 1, einen zweiten Empfänger 2 sowie einen dritten Empfänger 3 aufweist. Die Empfänger 2 und 3 sind parallel geschaltet, um eine grössere aktive Fläche zu erhalten. Die Empfänger 1 und 2, 3 sind hingegen gegeneinander geschaltet, um eine Hintergrundausblendung ab dem Abstand 29, beispielsweise ab 45 cm zu ermöglichen. Befindet sich ein Tastobjekt im Abstand 29, so liegt der Bildpunkt auf den Empfängern 1, 2 und 3 so, dass auf den beiden gegeneinander geschalteten Empfängern gleichviel Licht auftrifft, die Differenz somit null ist. Befindet sich ein Tastobjekt in einem grösseren Abstand so ist die genannte Differenz immer negativ oder null. Befindet sich ein Tastobjekt in einem Abstand der kleiner ist als der Abstand 29, beispielsweise im Abstand 28, der beispielsweise 15 cm beträgt, so ist die genannte Differenz positiv und die Empfangsvorrichtung 37 aktiv. In diesem Fall wird somit durch die Steuereinheit 11 das Ventil 12 geöffnet. Befindet sich ein Tastobjekt in einem Abstand der kleiner ist als ein Abstand 27, beispielsweise 5 cm beträgt, so wird dieser durch den vierten Empfänger 4 ausgeblendet. Dieser Empfänger 4 ist zum Empfänger 1 parallel geschaltet. In diesem nahen Tastbereich ist somit die Differenz wiederum negativ und entsprechend die Empfangsvorrichtung 37 ausgeschaltet. Befindet sich ein Tastobjekt in diesem nahen Bereich, so bleibt beispielsweise das Spülventil 12 geschlossen. Die Wirkungsweise des Referenzempfängers 5 ist oben erläutert.

## Patentansprüche

1. Elektronische Steuereinrichtung zur berührungslosen Steuerung einer sanitären Anlage, insbesondere eines Urinals, mit wenigstens einem Sender (6) zur Abgabe gerichteter Lichtsignale, und einer Empfangsvorrichtung (37), die an einem Tastobjekt (16,17,18) reflektierte Signale (21,22,23) aufnimmt und einer auf die Anlage (12-14) einwirkenden Schaltung (11) zuführt, **dadurch gekennzeichnet, dass** der Sender (6) und die Empfangsvorrichtung (37) eine optische Triangulationsanordnung bilden, wobei zur Ausblendung eines Hintergrundes Reflexionen (21) aus diesem Hintergrund und aus einem vorbestimmten Erfassungsbereich empfangen werden, wobei im Abstand zur Empfangsvorrichtung (37) ein Referenzempfänger (5) angeordnet ist, und dass zur Verhinderung einer Schaltung aufgrund einer Spiegelreflexion nur dann geschaltet wird, wenn die Empfangsvorrichtung (37) und der Referenzempfänger (5) gleichzeitig ein Signal empfangen.

2. Einrichtung nach Anspruch 1, **dadurch gekennzeichnet, dass** die Empfangsvorrichtung (37) wenigstens einen ersten Empfänger (1) und einen zweiten Empfänger (2) aufweist, dass die beiden Empfänger (1,2) in unterschiedlichen Abständen zum Sender (6) angeordnet sind, derart, dass ein Lichtfleck auf einem im Hintergrund (32) befindlichen Tastobjekt (16) im wesentlichen auf den ersten Empfänger (1) und ein Lichtfleck auf einem in einem Empfangsbereich (31) befindlichen Tastobjekt (18) im wesentlichen auf den zweiten Empfänger (2) abgebildet wird.

3. Einrichtung nach Anspruch 1 oder 2, **dadurch gekennzeichnet, dass** die Empfangsvorrichtung (37) eine Differentialdiode aufweist und ein Lichtfleck auf einem Tastobjekt mittels einer Empfangslinse (8) auf diese Differentialdiode abgebildet wird.

4. Einrichtung nach einem der Ansprüche 1 bis 3, **dadurch gekennzeichnet, dass** ein weiterer Empfänger (4) zur Erkennung eines nahen Tastbereiches vorgesehen ist.

5. Einrichtung nach einem der Ansprüche 1 bis 4, **dadurch gekennzeichnet, dass** die Leistung des Senders (6) den Reflexionseigenschaften des Tastobjektes nachgeführt wird.

6. Einrichtung nach einem der Ansprüche 3 bis 5, **dadurch gekennzeichnet, dass** die Differentialdiode eine erste Diode (1), eine zweite Diode (2) und eine dritte Diode (3) aufweist, dass die zweite und die dritte Diode parallel geschaltet und die dritte Diode mit den beiden anderen Dioden gegengeschaltet ist.

## Claims

1. Electronic control device for the contactless control of a sanitary installation, in particular of a urinal, having at least one transmitter (6) for the output of directed light signals and a reception appliance (37) which receives signals (21, 22, 23) reflected from an object sensed (16, 17, 18) and supplies them to a circuit (11) acting on the installation (12-14), **characterised in that** the transmitter (6) and the reception appliance (37) form an optical triangulation arrangement, reflections (21) from a background and from a predetermined detection range being received in order to blank out this background, a reference receiver (5) being arranged at a distance from the reception appliance (37) and, in order to prevent switching due to a mirror reflection, switching only occurring when the reception appliance (37) and the reference receiver (5) receive a signal simultaneously.

2. Device according to Claim 1, **characterised in that** the reception appliance (37) has at least a first receiver (1) and a second receiver (2), **in that** the two receivers ( 1, 2) are arranged at different distance from the transmitter (6) in such a way that a light spot on an object sensed (16) located in the background (32) is essentially formed on the first receiver (1) and a light spot of an object sensed (18) located in a reception range (31) is essentially formed on the second receiver (2).

3. Device according to Claim 1 or 2, **characterised in that** the reception appliance (37) has a differential diode and a light spot on an object sensed is formed on this differential diode by means of a reception lens (8).

4. Device according to one of Claims 1 to 3, **characterised in that** a further receiver (4) is provided to recognise a near-field sensing region.

5. Device according to one of Claims 1 to 4, **characterised in that** the power of the transmitter (6) is adjusted to suit the reflection properties of the object sensed.

6. Device according to one of Claims 3 to 5, **characterised in that** the differential diode has a first diode (1) a second diode (2) and a third diode (3), **in that** the second and the third diodes are connected in parallel and the third diode is connected in opposition to the two other diodes.

## Revendications

1. Dispositif de commande électronique pour la commande sans contact d'une installation sanitaire, notamment d'un urinoir, comportant au moins un émetteur (6) servant à délivrer des signaux lumineux dirigés, et un dispositif de réception (37), qui reçoit des signaux (21, 22, 23) réfléchis sur un objet de détection, et les envoie à un circuit (11) agissant sur l'installation (12-14), **caractérisé en ce que** l'émetteur (6) et le dispositif de réception (37) forment un dispositif de triangulation optique, tandis que pour l'élimination d'un fond, des réflexions (21) sont reçues à partir de ce fond et d'une zone prédéterminée de détection, qu'un récepteur de référence (5) est disposé à distance du dispositif de réception (37) et que pour empêcher une commutation en raison d'une réflexion spéculaire, une commutation est exécutée uniquement lorsque le dispositif de réception (37) et le récepteur de référence (5) reçoivent simultanément un signal.

2. Dispositif selon la revendication 1, **caractérisé en ce que** le dispositif de réception (37) comporte au moins un premier récepteur (1) et un second récepteur (2), que les deux récepteurs (1, 2) sont disposés à des distances différentes de l'émetteur (6) de telle sorte que l'image d'un spot de lumière d'un objet de détection (16) situé dans le fond (32) est formée essentiellement sur le premier récepteur (1) et que l'image d'un spot de lumière sur un objet de détection (18) situé dans une zone de réception (31) est formée essentiellement sur le second récepteur (2).

3. Dispositif selon la revendication 1 ou 2, **caractérisé en ce que** le dispositif de réception (37) possède une diode différentielle et que l'image d'un spot de lumière situé sur un objet de détection est formée à l'aide d'une lentille de réception (8) sur cette diode différentielle.

4. Dispositif selon l'une des revendications 1 à 3, **caractérisé en ce qu'**un autre récepteur (4) est prévu pour identifier une zone de détection proche.

5. Dispositif selon l'une des revendications 1 à 4, **caractérisé en ce que** la puissance de l'émetteur (6) est asservie aux caractéristiques de réflexion de l'objet de détection.

6. Dispositif selon l'une des revendications 3 à 5, **caractérisé en ce que** la diode différentielle comporte une première diode (1), une seconde diode (2) et une troisième diode (3), que les seconde et troisième diodes sont connectées en parallèle et que la troisième diode est connectée en opposition avec les deux autres diodes.
